# EUROPÄISCHE PATENTSCHRIFT

(11) **EP 2 592 201 B1**
(45) Veröffentlichungstag und Bekanntmachung des Hinweises auf die Patenterteilung: **21.06.2017**
(21) Anmeldenummer: 12192090.4
(22) Anmeldetag: 09.11.2012
(51) Int. Cl.: B29C 45/14, E05B 81/78, E05B 85/16

(54) **Handhabe**
Handle
Poignée

(30) Priorität: 11.11.2011 DE 102011055289
(43) Veröffentlichungstag der Anmeldung: 15.05.2013
(73) Patentinhaber: Huf Hülsbeck & Fürst GmbH & Co. KG, 42551 Velbert (DE)
(72) Erfinder: Müller, Dirk, 45359 Essen (DE); Bartels, Markus, 45472 Mülheim (DE)
(74) Vertreter: Vogel, Andreas

(56) Entgegenhaltungen:
- EP-A1- 2 177 695
- EP-A2- 2 535 489
- DE-A1- 10 348 719
- JP-A- 2007 247 268
- JP-A- 2007 254 995
- US-A1- 2008 079 537

## Beschreibung

Die Erfindung betrifft eine Handhabe für ein bewegliches Teil eines Kraftfahrzeuges, insbesondere für eine Tür, eine Heckklappe oder dergleichen, mit einem am beweglichen Teil für einen Benutzer von außen zugänglichen Griff und einer Elektronikbaugruppe, die zumindest ein Sensorelement und eine Elektronik aufweist, wobei die Elektronikbaugruppe geeignet ist vom Benutzer in der Nähe des Griffes aktiviert zu werden und mit einem kraftfahrzeugseitigen Sicherheitssystem zu kommunizieren.

In der DE 10 2004 038 569 B3 ist eine Handhabe offenbart, die einen Türgriff mit einer Elektronikbaugruppe umfasst. Hierbei besteht der Türgriff aus einem mit einer Abdeckschicht umspritzten Kunststoff-Spritzguss-Trägerkern. Der Trägerkern nimmt hierbei den größten Teil des Volumens des Kraftfahrzeugtürgriffs ein. Zudem weist der Trägerkern mehrere Ausnehmungen auf, in die Elektronikbaugruppen eingebracht sind. Die Anschlussleitungen der Elektronikbaugruppen sind durch einen im Inneren des Trägerkerns enthaltenen Kanal an einer Stelle nach außen geführt, die sich in montiertem Zustand hinter einer Türwandung befindet. Die Elektronikbaugruppen umfassen eine Sensoranordnung zum Erfassen der Annäherung der Hand eines Bedieners. Um ein möglichst geringes Gewicht des Türgriffes zu erreichen, weist der Trägerkern eine Schaumstruktur auf. Der die Oberflächeneigenschaften des Türgriffs bestimmende Kunststoff wird lediglich in der Abdeckschicht verwendet, der nur einen relativ kleinen Teil des Gesamtvolumens des Türgriffs einnimmt. Der große Teil des Volumens des Türgriffs wird von dem im Inneren angeordneten Trägerkern eingenommen. Obwohl dieser Türgriff bereits gute Eigenschaften hinsichtlich einer geringen Masse aufweist, besteht seitens der Industrie der Wunsch und die Anforderung, das Gewicht einer derartigen Handhabe weiter zu reduzieren, ohne dass die Funktionseigenschaften, insbesondere hinsichtlich der Elektronik, darunter leiden.

Zur Lösung dieser Aufgabe wird eine Handhabe mit sämtlichen Merkmalen des Anspruches 1 vorgeschlagen. In den abhängigen Ansprüchen sind bevorzugte Weiterbildungen ausgeführt.

Erfindungsgemäß ist eine Handhabe für ein bewegliches Teil eine Kraftfahrzeuges, insbesondere für eine Tür, eine Heckklappe oder dergleichen vorgesehen, mit einem am beweglichen Teil befestigbaren für einen Benutzer von außen zugänglichen Griff und einem Lagerarm, der mit dem Griff verbunden ist. Hierbei ist der Griff geeignet, um eine innenseitig des beweglichen Teils liegende Achse, an die der Lagerarm angreift, sich zu verschwenken. Zudem weist die Handhabe eine Elektronikbaugruppe auf, die zumindest ein Sensorelement und eine Elektronik aufweist, wobei die Elektronikbaugruppe geeignet ist vom Benutzer in der Nähe des Griffes aktiviert zu werden und mit einem kraftfahrzeugseitigen Sicherheitssystem verbindbar ist. Erfindungsgemäß ist das Sensorelement am Griff angeordnet und die Elektronik am Lagerarm befestigt. Der Griff weist eine Kavität und einen dünnwandigen Hüllkörper auf. Zudem umfasst der Hüllkörper die Kavität, wobei der Hüllkörper als Träger für das Sensorelement dient. Ferner ist die Kavität des Griffes im wesentlichen Bauteil frei.

Der wesentliche Vorteil dieser erfindungsgemäßen Handhabe ist, dass der Griff mit der Kavität und dem dünnwandigen Hüllkörper nur wenig Material benötigt, welches insbesondere aus Kunststoff besteht, so dass die Handhabe in ihrer Gesamtheit ein sehr geringes Gewicht bzw. eine sehr geringe Masse aufweist. Hierdurch sind zusätzlich die Herstellkosten der Handhabe wesentlich reduzierbar. Die Kavität verbleibt im Wesentlichen bauteilfrei, zugleich ist das Sensorelement in dem dünnwandigen Hüllkörper mit integriert und liegt oberflächennah am Griff, so dass eine zufriedenstellende Funktionalität der Elektronikbaugruppe sichergestellt ist. Ein weiterer wesentlicher Vorteil dieser Erfindung ist, dass die Elektronikbaugruppe hinsichtlich des Sensorelementes und der Elektronik geteilt ist. Das bedeutet, dass das eigentlich sensierende Element, das Sensorelement, in dem Griff verbleibt. Hierbei ist vorzugsweise das Sensorelement metallisch ausgeführt und wirkt als Elektrode. Beispielsweise kann das Sensorelement als Drahtelement, Folie oder Stanzteil, insbesondere Stanzblech ausgebildet sein. Die Elektronik, die mit dem Sensorelement verbunden ist, bearbeitet die vom Sensorelement detektierten Signale, wobei die Bearbeitung beispielsweise eine Auswertung von Signalen sein kann. Die Elektronik kann zudem als Steuerungseinheit, Überwachungseinheit, Regeleinheit oder Detektoreinheit ausgeführt sein, um im Ergebnis für die Elektronikbaugruppe festzustellen, inwieweit ein Benutzer sich in einer definierten Nähe des Griffes befindet, um eine Aktivierung der Elektronikbaugruppe zu starten und eine Kommunikation mit dem kraftfahrzeugseitigen Sicherheitssystem erfolgen zu lassen. Die Elektronik befindet sich am Lagerarm, wobei eine Leitung das Sensorelement mit der Elektronik verbinden kann. Zudem kann die Leitung eine Abschirmung aufweisen, wodurch störungsfrei eine Signalübertragung zwischen dem Sensorelement und der Elektronik durchführbar ist. Die Elektronik kann zudem über eine weitere Leitung mit einer kraftfahrzeugseitigen Steuerelektronik und/oder Bordelektronik in Signalverbindung stehen.

Vorteilhafterweise kann die Elektronik in der Nähe der Achse angeordnet ist, um die der Lagerarm geeignet ist sich zu verschwenken. Hierbei kann die Handhabe einen Montageträger aufweisen, der innenseitig des beweglichen Teils, insbesondere der Tür befestigbar ist. Somit kann die Befestigung der Handhabe am beweglichen Teil über den Montageträger erfolgen, der innenseitig des beweglichen Teils form- und/oder kraft- und/oder stoffschlüssig mit dem beweglichen Teil des Kraftfahrzeugs verbunden werden kann. Gleichzeitig kann der Montageträger für den Lagerarm die Achse bilden, um die der Lagerarm sich verschwenken kann.

Eine die Erfindung verbessernde Maßnahme kann vorsehen, dass die Elektronik derart am Lagerarm angeordnet ist, dass die Elektronik als Massenausgleich wirkt, der zumindest dazu beiträgt oder verhindert, dass der Griff in Folge von wirkenden Beschleunigungen, die etwaig bei einem Unfall auf das Kraftfahrzeug wirken, sich aus dem beweglichen Teil bewegt. Gemäß der Erfindung wird lediglich das Sensorelement im Griff belassen, wobei die Elektronik in dem Bereich des Kraftfahrzeuges verlagert wird, der innenseitig der Tür liegt. Das bedeutet, dass das Gewicht bzw. die Masse des Griffs durch die Verlagerung der Elektronik in das bewegliche Teil des Kraftfahrzeuges wesentlich reduziert werden kann. Folglich ist die Masse des Massenausgleichs reduzierbar, um bei einem etwaigen Unfall mit wirkenden Beschleunigungen am Kraftfahrzeug wirkungsvoll den Griff unbeweglich in der Tür zu halten, ohne dass die Gefahr besteht, dass die Tür sich öffnet.

Das Sensorelement kann erfindungsgemäß derart ausgebildet sein, dass es als kapazitiver Sensor oder als ein Piezosensor ausgeführt ist. Das bedeutet, dass die Elektronikbaugruppe eine Annäherung an den Griff über den kapazitiven Sensor erkennt oder eine Berührung des Griffes durch den Piezosensor sensiert. Vorteilhafterweise ist die Elektronikbaugruppe mit ihrem Sensorelement und der Elektronik Bestandteil eines Sicherheitssystems, insbesondere eines Zugangs- und/oder Fahrberechtigungskontrollsystems. Z.B. kann das Sicherheitssystem ein Keyless-System, Keyless-Go-System sein, bei dem eine Kommunikation zwischen der fahrzeugseitigen Elektronik und dem ID-Geber, den der Benutzer bei sich trägt stattfindet. Es hat sich vorteilhafterweise gezeigt, dass das im Griff angeordnete Sensorelement hinsichtlich der Umwelteinflüsse wie beispielsweise Verschmutzung, Feuchtigkeit, etc. unsensibel ist, so dass es nicht dringend erforderlich ist, das Griffteil mit einer Vergussmasse zu versehen, um wie es im Stand der Technik bekannt ist, die Elektronikbaugruppe wirkungsvoll vor Umwelteinflüssen zu schützen. Somit kann der Griff vergussmassenfrei ausgeführt sein, so dass die Masse des Griffs weiter reduzierbar ist. Gerade das Material der Vergussmasse trägt dazu bei, dass die Gesamtmasse des Griffs hoch ist. Aufgrund der erfindungsgemäßen Ausgestaltung des Griffs ohne Vergussmasse wird dazu beigetragen, dass auch die Masse des Massenausgleichs wesentlich reduziert werden kann. Bei bestimmten Handhaben kommt ein Massenausgleich zum Einsatz, der innenseitig der Kraftfahrzeugtür angeordnet ist, wie beispielsweise in der DE 20 23 859 C3. Dieser Massenausgleich weist eine definierte Masse auf, die zudem federbelastet sein kann. Bei einem Unfall verhindert der Massenausgleich, dass aufgrund der wirkenden Beschleunigungen das Kraftfahrzeug der Griff aus der Tür sich bewegt. Aufgrund der erfindungsgemäßen Massenreduktion des außenliegenden Griffs, kann nun der soeben beschriebene Massenausgleich, der in der Regel innenseitig der Tür sich befindet, wesentlich reduziert werden. Es ist ebenfalls denkbar, dass vollständig auf einen Massenausgleich verzichtet werden kann. Erfindungsgemäß kann somit eine kompakte, gut funktionierende Handhabe bereitgestellt werden, die mit einem geringen Gewicht in Bezug auf den Massenausgleich auskommt.

In einer möglichen Ausführungsform der Erfindung kann ein Container vorgesehen ist, in dem die Elektronik angeordnet ist, wobei insbesondere die Elektronik abgedichtet sich innerhalb des Containers befindet. Es ist denkbar, dass die Elektronik innerhalb des Containers durch eine Vergussmasse abgedichtet ist. Der Container nimmt somit zuverlässig die Elektronik auf. Gleichzeitig kann der Container mit der Elektronik und/oder der Vergussmasse eine Zusatzmasse bilden, die als Massenausgleich dienen kann. Der Container selbst weist eine entsprechende Masse auf, so dass der Container eine definierte Masse bildet. Über ein Deckelelement kann der Container verschlossen sein.

Zudem ist es denkbar, dass der Lagerarm ein Befestigungsmittel aufweist, an dem die Elektronik und/oder der Container angeordnet ist. Hierbei ist es möglich, dass die Elektronik und/oder der Container über eine Clipsverbindung und/oder Rastverbindung am Lagerarm befestigt sind. Vorteilhafterweise ist diese Befestigung auch nachträglich lösbar, um beispielsweise die Elektronik und/oder den Container auszutauschen.

In einer bevorzugten Ausführungsform der Erfindung kann der Hüllkörper einen innenliegenden Bereich und einen außenliegenden Bereich aufweisen, wobei der innenliegende Bereich dem beweglichen Teil zugewandt ist und der außenliegende Bereich dem beweglichen Teil abgewandt ist, wobei zumindest in einem der beiden Bereiche das Sensorelement angeordnet ist. Hierbei ist der innenliegende Bereich sowie der außenliegende Bereich des Hüllkörpers für den Benutzer frei zugänglich. Der Benutzer kann über seine Hand den innenliegenden sowie den außenliegenden Bereich sich nähern und/oder berühren, um eine definierte Aktion der Elektronikbaugruppe auszulösen.

Es kann vorgesehen sein, dass die Elektronik zwei Sensorelemente aufweist, wobei das erste Sensorelement in dem außenliegenden Bereich vorgesehen ist und das zweite Sensorelement im innenliegenden Bereich vorgesehen ist. Beide Sensorelemente sind vorteilhafterweise mit der gemeinsamen Elektronik verbunden. Ebenfalls kann es in einer weiteren Ausführungsform der Erfindung vorgesehen sein, dass jedes Sensorelement mit einer eigenen Elektronik verbunden ist, die jeweils separat am Lagerarm befestigt ist.

In einer weiteren, die Erfindung verbessernden Maßnahme ist es denkbar, dass das erste Sensorelement derart ausgeführt ist, dass eine bewusste Handlung des Benutzers detektierbar ist, wodurch ein kraftfahrzeugseitiger Verriegelungsvorgang über das Sicherheitssystem auslösbar ist. Alternativ und/oder zusätzlich ist es denkbar, dass das zweite Sensorelement derart ausgeführt ist, dass eine bewusste Handlung des Benutzers detektierbar ist, wodurch ein kraftfahrzeugseitiger Entriegelungsvorgang über das Sicherheitssystem auslösbar ist. Vorteilhafterweise ist die bewusste Handlung eine Annäherung des Benutzers zum Griff, insbesondere zum innenliegenden Bereich und/oder zum außenliegenden Bereich und/oder die bewusste Handlung einer Berührung des Griffes, insbesondere des innenliegenden Bereichs und/oder des außenliegenden Bereichs.

Das Sensorelement mit seiner Elektronik kann als Näherungssensor und/oder als Berührungssensor ausgebildet sein. Befindet sich der Benutzer in der Nähe des Griffes bzw. berührt diesen Griff am innenliegenden Bereich des Hüllkörpers und/oder am außenliegenden Bereich des Hüllkörpers, wird diese Aktion durch die Elektronikbaugruppe erfasst, wodurch ein Weckvorgang und/oder eine Berechtigungsüberprüfung und/oder ein Verriegelungsvorgang und/oder ein Entriegelungsvorgang des kraftfahrzeugseitigen Sicherheitssystems erfolgen kann. In der Regel trägt der Benutzer einen ID-Geber mit sich, der Teil des Sicherheitssystems des Kraftfahrzeugs ist. Bevor eine Entriegelung bzw. eine Verriegelung des beweglichen Teils ausgelöst wird, erfolgt eine Authentifizierungsabfrage zwischen dem Kraftfahrzeug und dem ID-Geber. Falls festgestellt wird, dass der Benutzer die berechtigte Person ist, erfolgt eine tatsächliche Ent- und/oder Verriegelung des beweglichen Teils. Vorteilhafterweise kann vorgesehen sein, dass vor der Authentifizierungsabfrage zunächst das Sicherheitssystem geweckt wird, nachdem der Benutzer den Griff mit seiner Hand entsprechend berührt bzw. sich dem Griff hinsichtlich eines definierten Abstandes nähert. Erfindungsgemäß kann der Berührungssensor derart konfiguriert sein, dass eine Entriegelung und/oder eine Öffnung des beweglichen Teils veranlasst wird, falls der Berührungssensor mit der Elektronik eine Kraft detektiert, die auf den Griff wirkt, die zwischen 10 N bis 100 N, vorzugsweise zwischen 20 N bis 80 N, mehr bevorzugt zwischen 40 N und 75 N liegt.

Das erste und/oder das zweite Sensorelement sind innerhalb des Hüllkörpers eingebettet. Vorteilhafterweise ist der Hüllkörper ein Spritzgussteil aus Kunststoff, wobei das erste und/oder das zweite Sensorelement während des Spritzgussverfahrens gleichzeitig umspritzt werden.

Vorteilhafterweise ist eine Handhabe mit einem Griff denkbar, die über eine Betätigung des Benutzers relativ zum beweglichen Teil des Kraftfahrzeuges verschwenkt und/oder bewegt werden kann. Beispielsweise ist es denkbar, dass am Griff neben dem Lagerarm ein Betätigungsarm angeordnet ist, wobei der Lagerarm und der Betätigungsarm in das bewegliche Teil hineinragen, wobei insbesondere der Griff verschwenkbar am beweglichen Teil gelagert ist. Am Lagerarm ist die Handhabe um die oben genannte Schwenkachse gelagert. Der in das bewegliche Teil hineinragende Betätigungsarm dient dazu, während seiner Bewegung eine entsprechende Aktion an einem Schloss des beweglichen Teils auszulösen. Beispielsweise kann der Betätigungsarm über ein Gestänge, Bowdenzug oder über ein ähnliches Kraftübertragungsteil mit dem Schloss verbunden sein, um bei einer Verschwenkung des Griffs mechanisch auf das Schloss mittelbar und/oder unmittelbar einzuwirken, wobei das Schloss wiederum zwischen einer Entriegelungsposition und/oder einer Verriegelungsposition wechseln kann. Ebenfalls ist es denkbar, dass die Betätigung des Schlosses elektrisch erfolgt, indem der Betätigungsarm einen Schalter aktiviert, der sich in der Nähe des Betätigungsarms befindet. Der Schalter kann anschließend elektrisch das zum Schalter entfernte Schloss ansteuern, welches wiederum zwischen seiner Entriegelungsposition und/oder seiner Verriegelungsposition wechseln kann.

Ein wesentlicher Vorteil der Trennung des Sensorelementes von seiner Elektronik ist, dass das Sensorelement hinsichtlich diverser Umwelteinflüsse, wie hohe/tiefe Temperaturen, Feuchtigkeit etc. unempfindlich ist. Somit sind keine wesentlichen Anforderungen erforderlich, während des Spritzgussverfahrens der Handhabe, insbesondere des Griffes das Sensorelement zu schützen. Die empfindliche Elektronik ist hingegen getrennt vom Griff kraftfahrzeugseitig vorgesehen, so dass auf wirksame Weise ein gut funktionierendes Gesamtsystem geschaffen wird, wobei gleichzeitig der Herstellungsaufwand wesentlich vereinfacht werden kann, ohne dass die Gefahr besteht, dass die Funktionsweise der Elektronikbaugruppe gefährdet ist. Nachdem die Handhabe, insbesondere der Griff mit seinem Hüllkörper und der mit dem integrierten Sensorelement hergestellt ist, befindet sich das zumindest eine Sensorelement unlösbar innerhalb des dünnwandigen Hüllkörpers. Vorteilhafterweise erfolgt die Verbindung zwischen dem Sensorelement und der Elektronik über eine kabelgebundene Leitung. In einer weiteren, die Erfindung verbessernden Maßnahme kann die Leitung eine Abschirmung aufweisen, wodurch störungsfrei eine Signalübertragung zwischen dem Sensorelement und der Elektronik durchführbar ist. Die Abschirmung ummantelt die Leitung.

Ferner kann in einer weiteren Ausführungsform der erfindungsgemäßen Handhabe das Sensorelement und die Elektronik über eine lösbare Verbindung miteinander konnektiert sein. Diese Ausgestaltung erleichtert im Falle eines Schadens z. B. an der Handhabe oder auch am Sensorelement oder an der Elektronik einen Austausch dieser Teile. Hierdurch können die Wartungskosten bei eventuellen Schäden im Betrieb gesenkt werden. Bevorzugt ist hierbei eine Ausbildung, bei der ein Steckerelement zwischen dem Sensorelement und der Elektronik vorgesehen ist, wobei insbesondere das Steckerelement am Lagerarm angeordnet ist. Hierbei ist es denkbar, dass das Steckerelement über eine Rastverbindung, Clipsverbindung etc. zuverlässig am Lagerarm gehalten ist. Das Steckerelement kann auch in der Elektronik integriert sein.

Gemäß einer weiteren vorteilhaften Ausführungsform der erfindungsgemäßen Handhabe kann der Griff eine Materialstruktur mit Mikrozellen aufweisen, wobei insbesondere die Mikrozellen eine Größe von durchschnittlich weniger als 500 µm aufweisen. Es hat sich vorteilhafterweise gezeigt, dass der Griff, insbesondere der Hüllkörper mit einer derartigen Materialstruktur verbesserte mechanische Eigenschaften aufweist. Insbesondere hat sich gezeigt, dass eine Materialstruktur aus Mikrozellen gute Eigenschaften mit Blick auf Medienbeständigkeit, Biegefestigkeit, Dichtheit sowie geringes Gewicht aufweist. Gleichzeitig kann ein dünnwandiger Hüllkörper geschaffen werden, der zuverlässig von außen vom Benutzer sowie von diversen Umwelteinflüssen beansprucht werden kann, ohne dass die Gefahr einer Materialzerstörung besteht. Es hat sich gezeigt, dass hinsichtlich der Geometrie von Kraftfahrzeuggriffen eine derartige Größe der Mikrozellen von Vorteil ist, welches sich insbesondere auf das geringe Gewicht sowie die guten mechanischen Eigenschaften, insbesondere Belastbarkeit bezieht, wobei gleichzeitig eine gute Einbettung des Sensorelementes im Hüllkörper erzielbar ist.

Die mechanischen Eigenschaften des Griffes können in einer weiteren Ausführungsform weiter verbessert werden, indem die Materialstruktur derart ausgeführt ist, dass jede Mikrozelle unabhängig von den benachbart angeordneten Zellen geschlossen ist. Das bedeutet, dass die Mikrozellen im Wesentlichen nicht mit den umliegenden Mikrozellen der Materialstruktur verbunden sind. Um das Gewicht der Handhabe, insbesondere des Griffes zu reduzieren, ist vorteilhaft vorgesehen, dass der Griff ein Mikrozellenvolumen von mindestens 5% bevorzugt von mehr als 15% besonders bevorzugt von mehr als 25% und ganz bevorzugt von mehr als 45% aufweist. Alternativ und/oder zusätzlich kann die Erfindung sich dadurch auszeichnen, dass der Griff eine Mikrozellendichte von mehr als 10⁵ Zellen/cm³ aufweist, wodurch ebenfalls wesentlich das Gewicht reduziert werden kann und die mechanischen Eigenschaften verbessert werden können.

Vorzugsweise kann die erfindungsgemäße Handhabe derart ausgestalt sein, dass der Griff ein Kavitätsvolumen von mindestens 50%, bevorzugt von mehr als 60%, besonders bevorzugt von mehr als 80% und ganz bevorzugt von mehr als 90% aufweist. Auch dieses trägt dazu bei, dass das Gesamtgewicht der Handhabe im Vergleich zum Stand der Technik reduziert werden kann, wobei gleichzeitig die Kavität nahezu bauteilfrei am Kraftfahrzeug verbleibt.

In einer möglichen Ausführungsform der Erfindung kann der Griff an seiner Außenfläche, die sichtbar vom Kraftfahrzeug angeordnet ist, mit einer dünnen Schicht versehen sein, die beispielsweise aufgedruckt oder auflackiert sein kann. Diese Schicht kann eine bzw. unterschiedliche Farben aufweisen. Designelemente, Buchstaben, Zahlen, ein Emblem etc. sind auf dieser Schicht ebenfalls abbildbar.

Vorzugsweise kann der Lagerarm eine Aufnahme aufweisen, in der die Elektronik eingebracht ist, wobei insbesondere in der Aufnahme Vergussmasse eingebracht ist. Die Aufnahme kann als Öffnung, einseitig geöffnete Öffnung ausgebildet sein, wobei die Elektronik in die Aufnahme eingelegt werden kann.

Zweckmäßigerweise kann die Achse, an der der Lagerarm drehbar gelagert ist, zwischen der Elektronik und dem Griff liegen. Bei einem etwaigen Unfall wirkt die Elektronik als Massenausgleich und wirkt gegen die Kräfte die am Griff angreifen.

Vorteilhafterweise kann die erfindungsgemäße Handhabe derart ausgestaltet sein, dass das Befestigungsmittel als elektrischer Kontakt zwischen dem Sensorelement und der Elektronik dient. Das Befestigungsmittel, das in erster Funktion für die Befestigung des Containers und/oder der Elektronik am Lagerarm dient, kann gleichzeitig den elektrischen Kontakt zwischen der Elektronik und dem Sensorelement herstellen.

Ebenfalls kann es vorgesehen sein, dass die elektrischen Kontakte zwischen dem Sensorelement und der Elektronik über Schneidmesserkontakte verwirklicht werden, wodurch der Montageaufwand zur Herstellung der elektrischen Verbindung zwischen dem Sensorelement und der Elektronik vereinfacht wird.

In einer möglichen Ausführungsform der Erfindung kann die Elektronik in der Nähe der Achse, um die der Lagerarm verschwenkt werden kann, angeordnet sein. Ebenfalls ist es denkbar, dass die Elektronik auch zumindest bereichsweise über der Achse liegen kann, welches von den jeweiligen Einbausituationen der Handhabe innerhalb der Tür abhängt.

Es zeigen:
- Figur 1: eine schematische Ansicht auf eine Handhabe eines Kraftfahrzeuges, die an einer Tür befestigt ist,
- Figur 2: eine vereinfachte Darstellung auf eine Handhabe eines Kraftfahrzeuges gemäß Figur 1, wobei eine Elektronik über ein Befestigungsmittel am innenliegenden Lagerarm der Handhabe befestigt ist,
- Figur 3: eine weitere Ausführungsalternative einer Befestigung der Elektronik am Lagerarm der Handhabe,
- Figur 4: eine weitere Alternative zur Anordnung der Elektronik am Lagerarm der Handhabe,
- Figur 5: ein weiteres Beispiel zur Befestigung der Elektronik am Lagerarm der Handhabe,
- Figur 6: eine weitere Ausführungsalternative zur Befestigung der Elektronik am Lagerarm der Handhabe und
- Figur 7: eine schematische Ansicht auf ein Kraftfahrzeug mit einer Handhabe, die beispielsweise in Figur 1 - Figur 6 exemplarisch gezeigt ist.

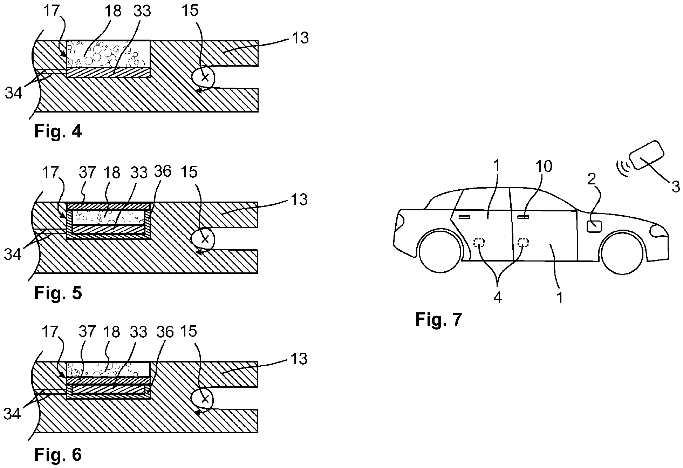

In Figur 7 ist ein Kraftfahrzeug dargestellt, das an seiner Tür 1 eine von außen vom Benutzer betätigbare Handhabe aufweist, die außenseitig mit einem Griff 10 ausgeführt ist. Der Griff 10 ist Bestandteil eines Sicherheitssystems, insbesondere eines Zugangskontrollsystems und/oder eines Fahrberechtigungskontrollsystems. Wie in Figur 7 schematisch gezeigt ist, weist die Tür 1 ein Schloss 4 auf, welches über eine definierte Aktivierung am Griff 10 angesprochen werden kann. In Abhängigkeit vom jeweiligen Anwendungsfall kann über eine Annäherung und/oder Berührung des Griffes 10 eine Verriegelung und/oder Entriegelung seitens des Schlosses 4 ausgelöst werden. Ebenfalls ist es denkbar, dass über ein entsprechendes aktives Ziehen an dem Griff 10 das Schloss 4 derart aktiviert und bewegt werden kann, wodurch ein Öffnungsvorgang der Tür 1 realisierbar ist und der Benutzer in das Kraftfahrzeug einsteigen kann.

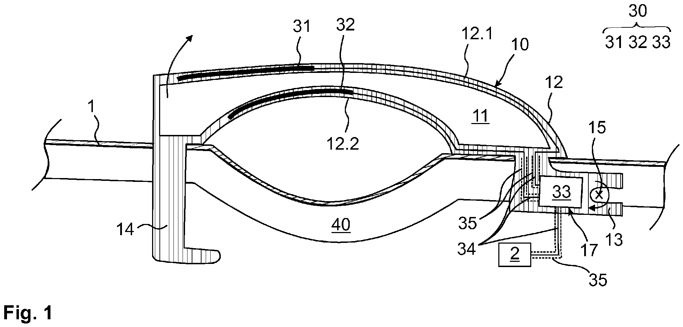

Die Figuren 1 - 6 zeigen mögliche Beispiele einer Handhabe, die in Figur 7 einsetzbar ist. Die Handhabe ist, wie bereits oben erwähnt ein Bestandteil eines Sicherheitssystems 2, insbesondere einer Schließeinrichtung eines Kraftfahrzeuges, wobei die Schließeinrichtung das Schloss 4 mit umfasst. Das Sicherheitssystem 2 kann zudem einen ID-Geber 3 mit umfassen, den der Benutzer bei sich trägt. Damit nur die berechtigte Person in das Kraftfahrzeug gelangen kann, erfolgt zwischen dem ID-Geber 3 und dem Kraftfahrzeug eine Identifikationsprüfung, die kodifiziert sein kann.

Der Griff 10 weist eine Kavität 11 auf, die im Wesentlichen bauteilfrei ist. Zudem ist der Griff 10 mit einem dünnwandigen Hüllkörper 12 ausgeführt, der aus einem Kunststoff besteht. Innerhalb des Hüllkörpers 12 sind zwei Sensorelement 31, 32 eingebettet. Diese Sensorelement 31, 32 sind Bestandteil einer Elektronikbaugruppe 30, die sich aus einer Elektronik 33 zusätzlich zusammensetzt. Die Elektronik 33 ist fahrzeugseitig befestigt. In den vorliegenden Ausführungsbeispielen gemäß Figur 1 bis Figur 6 ist die Elektronik 33 an einem Lagerarm 13 befestigt, der in die Fahrzeugtür 1 hineinragt. Auf der gegenüberliegenden Seite des Lagerarms 13 ist ferner ein Betätigungsarm 14 vorgesehen, der ebenfalls in die Fahrzeugtür 1 hineinragt. Der Lagerarm 13 weist an seinem freien Ende eine Lagerstelle auf, so dass über eine Ziehbewegung am Griff 10, der Griff 10 weg von der Tür 1 um eine Achse 15 verschwenkt werden kann, und zwar eine Drehbewegung mit dem Uhrzeigersinn durchführt. Der Betätigungsarm 14 kann durch seine Mitbewegung eine Aktion an der Tür 1 auslösen. Diese Aktion kann beispielsweise bewirken, dass ein Schloss 4, welches explizit in Figur 7 schematisch gezeigt ist, eine Entriegelung der Tür 1 entstehen lässt. Beispielsweise ist der Betätigungsarm 14 über einen nicht explizit gezeigten Bowdenzug mit dem Schloss 4 verbunden. Ebenfalls ist es denkbar, dass der Betätigungsarm 14 einen Schalter während seiner Bewegung aktiviert, wodurch das Schloss 4 der Tür 1 angesteuert werden kann.

Der Hüllkörper 12 weist einen außenliegenden Bereich 12.1 auf, in dem das erste Sensorelement 31 angeordnet ist. Zudem ist der Hüllkörper 12 mit einem innenliegenden Bereich 12.2 ausgebildet, in dem das zweite Sensorelement 32 sich befindet. Das außenliegende Sensorelement 31 hat die Funktion, einen Verriegelungsvorgang eines Sicherheitssystems 2 auszulösen, welches in dem Kraftfahrzeug angeordnet ist. Das innenliegende Sensorelement 32 dient hingegen dazu, einen Entriegelungsvorgang des Sicherheitssystems 2 zu bewirken, das bedeutet, dass der Benutzer, der einen ID-Geber 3 bei sich trägt, eine entsprechende Aktivierung der Elektronikbaugruppe 30 bewirkt, wodurch eine Kommunikation mit dem kraftfahrzeugseitigen Sicherheitssystem 2 erfolgt. Zudem wird überprüft, inwieweit der Benutzer die Berechtigung hat, einen entsprechenden Vorgang am Sicherheitssystem 2 auszulösen, das bedeutet eine Entriegelung bzw. Verriegelung des Kraftfahrzeuges, insbesondere seines beweglichen Teils 1 auszulösen. In den vorliegenden Ausführungsbeispielen gemäß Figur 1 bis Figur 6 sind beide Sensorelement 31, 32 als Näherungssensoren ausgebildet. Alternativ ist denkbar, dass das erste Sensorelement 31 auch als Berührungssensor arbeiten kann, wobei das zweite Sensorelement 32 als Näherungssensor ausgebildet ist. Die Elektronik 33 wertet eine Annäherung bzw. eine Berührung des Griffes aus. Ferner wird ein Authentifizierungsvorgang kraftfahrzeugseitig ausgelöst, nachdem eine Annäherung/Berührung des außenliegenden Bereiches 12.1 des Hüllkörpers 12 und/oder eine Annäherung des innenliegenden Bereichs 12.2 des Hüllkörpers 12 erfolgt ist.

Gemäß sämtlicher Ausführungsbeispiele zeichnet sich der Griff 10 dadurch aus, dass er eine große Gewichteinsparung aufgrund der bauteilfreien Kavität 11 hat. Zudem befindet sich lediglich das Sensorelement 31, 32 innerhalb des Hüllkörpers 12, wobei die empfindliche Elektronik 33 am Lagerarm 13 innenseitig des Kraftfahrzeuges befestigt ist. Die beiden Sensorelemente 31, 32 können als Drahtelemente, Folien oder Stanzteile ausgebildet sein und im Wesentlichen längs der Erstreckung des Griffs 10 angeordnet sein. Zwischen der Elektronik 33 und dem Sicherheitssystem 2 erfolgt ebenfalls eine Datenkommunikation. Es ist ebenfalls denkbar, dass lediglich ein Sensorelement 31 oder 32 im Hüllkörper 12 angeordnet ist, wobei beispielsweise unter zwei unterschiedliche Handlungen oder Aktionen des Benutzers eine Entriegelung und/oder eine Verriegelung über das Sicherheitssystem 2 auslösbar ist. Beispielsweise ist es denkbar, unterschiedliche Zonen bzw. Orte am außenstehenden Griff 10 für den Benutzer bereitzustellen, um unterschiedliche Aktionen für das Sicherheitssystem 2 auslösen zu können.

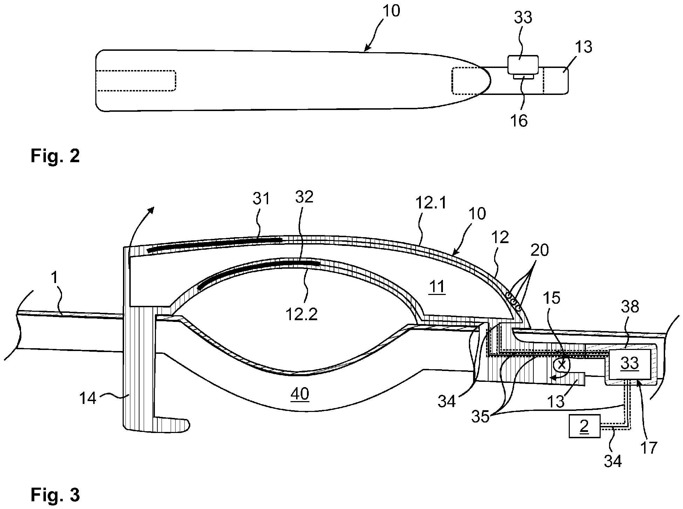

Die Masse des Griffes 10 kann des Weiteren weiter reduziert sein, in dem der Hüllkörper 12 eine Materialstruktur aus einer Vielzahl an Mikrozellen 20 aufweist, welches exemplarisch in Figur 3 gezeigt ist. Hierdurch kann ein Materialverbrauch bei der Herstellung des Hüllkörpers 12, insbesondere des Griffes 10 reduziert werden, wobei gleichzeitig gute mechanische Eigenschaften, insbesondere eine hohe Festigkeit, erzielbar ist. Selbstverständlich ist es denkbar, dass der Griff an der Oberfläche eine Schicht aufweist, um beispielsweise den Griff 10 mit einer gewünschten Farbe zu versehen. Diese Materialstruktur ist komplett am Griff 10, insbesondere im gesamten Hüllkörper 12 vorgesehen.

In Figur 1 ist schematisch der Lagerarm 13 gezeigt, der um die Achse 15 verschwenkt werden kann. Innenseitig der Tür 1 ist ein Montageträger 40 vorgesehen, der gleichzeitig die Achse 15 für den Lagerarm 13 bildet. Die Elektronik 33 ist in Figur 1 in einer Aufnahme 17 des Lagerarms 13 eingebracht. Die Anordnung der Elektronik 33 am Lagerarm 14 kann auf unterschiedliche Weise erfolgen. Besonders vorteilhaft ist hierbei, dass die Befestigung der Elektronik 33 in der Nähe der Drehachse 15 erfolgt. Figur 2 zeigt schematisch, dass beispielsweise die Elektronik 33 über Befestigungsmittel 16 am Lagerarm 13 befestigt sein kann. Beispielsweise ist das Befestigungsmittel 16 als Rastmittel ausführbar, so dass montagefreundlich die Elektronik 33 am Lagerarm 13 befestigbar ist. Somit lässt sich zusätzlich vorteilhaft erzielen, dass die Elektronik 33 einfach ohne Materialzerstörungen wieder reversibel vom Lagerarm 13 zu lösen ist.

Gemäß Figur 3 ist die Elektronik 33 rechts von der Drehachse 15 des Lagerarms 13 angeordnet. Die Elektronik 33 kann an einem separaten Träger 38 befestigt sein, wobei der Träger 38 wiederum am Lagerarm 13 angeordnet ist. Beispielsweise ist eine Rastverbindung zwischen dem Träger 38 und dem Lagerarm 13 denkbar. Alternativ kann ebenfalls vorgesehen sein, dass der Lagerarm 13 mit dem Träger 38 ein monolithisches und/oder materialeinheitliches Bauteil bilden, wobei die Elektronik 33 in diesem monolithischen Bauteil integriert sein kann. Ebenfalls ist es denkbar, dass die Elektronik 33 über mindestens ein Befestigungsmittel an diesem monolithischen Bauteil befestigt ist.

Figur 4 zeigt ein weiteres Beispiel die Elektronik 33 am Lagerarm 13 anzuordnen. Hierbei ist der Lagerarm 13 mit einer Aufnahme 17 ausgeführt, in der die Elektronik 33 eingelegt ist. Um die Elektronik 33 vor Umwelteinflüssen zu schützen, befindet sich oberhalb der Elektronik 33 eine Vergussmasse 18.

Alternativ zu Figur 4 ist es ebenfalls möglich, die Elektronik 33 in einem Container 36 einzusetzen und in diesen Container 36 Vergussmasse 18 einzubringen. Der Container 36 befindet sich samt Elektronik 33 und Vergussmasse 18 in der entsprechenden Aufnahme 17 des Lagerarms 13.

Figur 6 zeigt das Ausführungsbeispiel, bei dem die Elektronik 33 sich innerhalb des Containers 36 befindet, wobei ein Deckel 37 den Container 36 abschließt. Der Container 36 ist in der Aufnahme 17 des Lagerarms 13 eingelegt. Oberhalb des Containers 36 ist eine Vergussmasse 18 eingebracht.

In sämtlichen Ausführungsbeispielen bezieht sich die Handhabe auf einen Griff 10, der eine Kavität 11 aufweist, wodurch die Masse des Griffes 10 reduziert ist. Die Sensorelemente 31, 32 sind Bestandteil der Elektronikbaugruppe 30. Hierbei kann die Elektronik 33 aus einer Leiterplatine bestehen, die die Signale der Sensorelemente 31, 32 aufnimmt, insbesondere weiter "verarbeiten" kann. Wie in Figur 1 gezeigt ist, ist eine Leitung 34 vorgesehen, die die Sensorelemente 31, 32 sowie das Sicherheitssystem 2 mit seiner Bordelektronik verbindet.

Die in den Ausführungsbeispielen gezeigte Handhabe verfügt über eine explizit nicht dargestellten Mechanismus mit einem Massenausgleich, der in Folge von wirkenden Beschleunigungen, die bei einem Unfall auf das Kraftfahrzeug wirken können, verhindert, dass das Griffteil 10 aus der Tür 1 sich bewegt. Dieser Mechanismus ist beispielsweise in der DE 20 23 859 C3 beschrieben. Es hat sich gezeigt, dass bei Unfällen, gerade Querbeschleunigungen derart am Griff 10 wirken können, wodurch ein ungewolltes Öffnen der Tür 1 ausgelöst werden kann. Im Falle eines Unfalls, insbesondere bei einem Seitenaufprall des Kraftfahrzeuges versucht der Griff 10 aufgrund seiner Massenträgheit sich aus der Tür 1 zu bewegen. Der nicht explizit dargestellte Massenausgleich, der innenseitig der Tür 1 angeordnet ist, übt eine Gegenkraft auf die Handhabe, insbesondere auf den Griff 10 aus, so dass der Griff 10 unbeweglich in seiner Position verbleibt. In den vorliegenden Ausführungsbeispielen ist der Griff 10 mit einem Hohlraum 11 ausgeführt und weist somit ein geringeres Eigengewicht auf. Folglich ist nur eine geringere Masse hinsichtlich des Massenausgleich notwendig. Somit kann die Handhabe in ihrem Gesamtgewicht reduziert werden, da das Sensorelement 31, 32 mehr oder weniger unempfindlich durch die Umwelteinflüsse ist, ist es in den vorliegenden Ausführungsbeispielen nicht unbedingt notwendig, die Sensorelemente mit einer Vergussmasse abzudichten. Der Verzicht auf Vergussmasse trägt ebenfalls dazu bei, das Gesamtgewicht der Handhabe zu reduzieren.

Gemäß Figur 3 befindet sich die Achse 15 zwischen dem Griff 10 und der Elektronik 33. Die Elektronik 33 mit dem Träger 38 kann hierbei als Massenausgleich wirken, um wirkungsvoll bei einem Unfall, insbesondere bei einem Seitenaufprall wirkungsvoll zu verhindern, dass der Griff 10 aus der Tür 1 sich bewegt. Ebenfalls ist es denkbar, dass gemäß Figur 3 am Träger 38 zusätzliche Gewichte angeordnet werden können, um einen entsprechenden Massenausgleich für die Handhabe bereitzustellen.

Die Anordnung der Elektronik 33 gemäß Figur 4 bis Figur 6 sowie Figur 2 kann ebenfalls rechts von der Achse 15 erfolgen, wie es in Figur 3 gezeigt ist. Somit ist das Ausführungsbeispiel gemäß Figur 3 mit den Ausführungsbeispielen gemäß Figur 2 und Figur 4 bis Figur 6 kombinierbar.

Sämtliche Leitungen 34 der gezeigten Ausführungsbeispiele können mit einer Abschirmung 35 versehen sein, wodurch störungsfrei eine Signalübertragung zwischen den Sensorelementen 31, 32 und der Elektronik 33 sowie dem Sicherheitssystem 2 durchführbar ist.

### Bezugszeichenliste

- 1: bewegliches Teil, Tür
- 2: Sicherheitssystem
- 3: ID-Geber
- 4: Schloss

- 10: Griff
- 11: Kavität
- 12: Hüllkörper
- 12.1: außenliegender Bereich
- 12.2: innenliegender Bereich
- 13: Lagerarm
- 14: Betätigungsarm
- 15: Achse
- 16: Befestigungsmittel
- 17: Aufnahme
- 18: Vergussmasse

- 20: Mikrozelle

- 30: Elektronikbaugruppe
- 31: erstes Sensorelement
- 32: zweites Sensorelement
- 33: Elektronik
- 34: Leitung
- 35: Abschirmung
- 36: Container
- 37: Deckel
- 38: Träger

- 40: Montageträger

## Patentansprüche

1. Handhabe für ein bewegliches Teil (1) eines Kraftfahrzeuges, insbesondere für eine Tür (1), eine Heckklappe oder dergleichen, mit
einem am beweglichen Teil (1) befestigbaren, für einen Benutzer von außen zugänglichen Griff (10) und einem Lagerarm (13), der mit dem Griff (10) verbunden ist, wodurch der Griff (10) geeignet ist, um eine innseitig des beweglichen Teils (1) liegende Achse (15), an der der Lagerarm (13) angreift, sich zu verschwenken,
einer Elektronikbaugruppe (30), die zumindest ein Sensorelement (31, 32) und eine Elektronik (33) aufweist, wobei die Elektronikbaugruppe (30) geeignet ist vom Benutzer in der Nähe des Griffes (10) aktiviert zu werden und mit einem kraftfahrzeugseitigen Sicherheitssystem (2) verbindbar ist, wobei
das Sensorelement (31, 32) am Griff (10) angeordnet ist und die Elektronik (33) am Lagerarm (13) befestigt ist, der Griff (10) eine Kavität (11) und einen dünnwandigen Hüllkörper (12) aufweist,
der Hüllkörper (12) die Kavität (11) umfasst und als Träger für das Sensorelement (31, 32) dient, wobei die Kavität (11) bauteilfrei ist,
wobei das Sensorelement (31, 32) in dem dünnwandigen Hüllkörper (12) mit integriert ist und oberflächennah im Griff (10) liegt.

2. Handhabe nach Anspruch 1,
**dadurch gekennzeichnet,**
**dass** die Elektronik (33) in der Nähe der Achse (15) angeordnet ist, um die der Lagerarm (13) geeignet ist sich zu verschwenken.

3. Handhabe nach Anspruch 1 oder 2,
**dadurch gekennzeichnet,**
**dass** die Elektronik (33) derart am Lagerarm (13) angeordnet ist, dass die Elektronik (33) als Massenausgleich wirkt, der zumindest dazu beiträgt oder verhindert, dass der Griff (10) in Folge von wirkenden Beschleunigungen, die etwaig bei einem Unfall auf das Kraftfahrzeug wirken, sich aus dem beweglichen Teil (1) bewegt.

4. Handhabe nach einem der vorhergehenden Ansprüchen,
**dadurch gekennzeichnet,**
**dass** der Griff (10) vergussmassenfrei ausgeführt ist und/oder dass ein Container (36) vorgesehen ist, in dem die Elektronik (33) angeordnet ist, wobei insbesondere die Elektronik (33) abgedichtet sich innerhalb des Containers (36) befindet.

5. Handhabe nach einem der vorhergehenden Ansprüchen,
**dadurch gekennzeichnet,**
**dass** der Lagerarm (13) ein Befestigungsmittel (16) aufweist, an dem die Elektronik (33) und/oder der Container (36) angeordnet ist.

6. Handhabe nach einem der vorhergehenden Ansprüchen,
**dadurch gekennzeichnet,**
**dass** das Sensorelement (31, 32) eine Elektrode ist und/oder dass das Sensorelement (31, 32) als kapazitiver Sensor und/oder als ein Piezosensor ausgeführt ist.

7. Handhabe nach einem der vorhergehenden Ansprüchen,
**dadurch gekennzeichnet,**
**dass** der Hüllkörper (12) einen innenliegenden Bereich (12.2) und einen außenliegenden Bereich (12.1) aufweist, wobei der innenliegende Bereich (12.2) dem beweglichen Teil (1) zugewandt ist und der außenliegende Bereich (12.1) dem beweglichen Teil (1) abgewandt ist, wobei zumindest in einem der beiden Bereiche (12.1,12.2) das Sensorelement (31, 32) angeordnet ist.

8. Handhabe nach Anspruch 7,
**dadurch gekennzeichnet,**
**dass** die Elektronik (33) zwei Sensorelemente (31, 32) aufweist, wobei das erste Sensorelement (31) in dem außenliegenden Bereich (12.1) vorgesehen ist und das zweite Sensorelement (32) im innenliegenden Bereich (12.2) vorgesehen ist, wobei insbesondere das erste Sensorelement (31) derart ausgeführt ist, dass eine bewusste Handlung des Benutzers detektierbar ist, wodurch ein kraftfahrzeugseitiger Verriegelungsvorgang über das Sicherheitssystem (2) auslösbar ist und/oder das zweite Sensorelement (32) derart ausgeführt ist, dass eine bewusste Handlung des Benutzers detektierbar ist, wodurch ein kraftfahrzeugseitiger Entriegelungsvorgang über das Sicherheitssystem (2) auslösbar ist.

9. Handhabe nach Anspruch 8,
**dadurch gekennzeichnet,**
**dass** die bewusste Handlung eine Annäherung des Benutzers zum Griff (10), insbesondere zum innenliegenden Bereich (12.2) und/oder zum außenliegenden Bereich (12.1) ist und/oder die bewusste Handlung eine Berührung des Griffes (10), insbesondere des innenliegenden Bereichs (12.2) und/oder des außenliegenden Bereichs (12.1) ist.

10. Handhabe nach einem der vorhergehenden Ansprüche,
**dadurch gekennzeichnet,**
**dass** das Sensorelement (31, 32) metallisch ist und als Elektrode wirkt, wobei insbesondere das Sensorelement (31, 32) als Drahtelement, Folie oder Stanzteil, insbesondere Stanzblech ausgebildet ist.

11. Handhabe nach einem der vorhergehenden Ansprüche,
**dadurch gekennzeichnet,**
**dass** das Sensorelement (31, 32) innerhalb des Hüllkörpers (12) eingebettet ist und/oder dass eine Leitung (34) das Sensorelement (31, 32) mit der Elektronik (33) verbindet, wobei die Leitung (34) eine Abschirmung (35) aufweist, wodurch störungsfrei eine Signalübertragung zwischen dem Sensorelement (31, 32) und der Elektronik (33) durchführbar ist.

12. Handhabe nach einem der vorhergehenden Ansprüche,
**dadurch gekennzeichnet,**
**dass** der Griff (10) eine Materialstruktur mit Mikrozellen (20) aufweist, wobei insbesondere die Mikrozellen (20) eine Größe von durchschnittlich weniger als 500 µm aufweisen und/oder dass jede Mikrozelle (20) unabhängig von den benachbart angeordneten Zellen geschlossen ist und/oder der Griff (10) ein Mikrozellenvolumen von mindestens 5% bevorzugt von mehr als 15% besonders bevorzugt von mehr als 25% und ganz bevorzugt von mehr als 45% aufweist und/oder der Griff (10) eine Mikrozellendichte von mehr als 10⁵ Zellen/cm³ aufweist und/oder der Griff (10) ein Kavitätsvolumen von mindestens 50% bevorzugt von mehr als 60% besonders bevorzugt von mehr als 80% und ganz bevorzugt von mehr als 90% aufweist.

13. Handhabe nach einem der vorhergehenden Ansprüche,
**dadurch gekennzeichnet,**
**dass** die Elektronik (33) und/oder der Container (36) eingerastet am Lagerarm (13) ist.

14. Handhabe nach einem der vorhergehenden Ansprüche,
**dadurch gekennzeichnet,**
**dass** der Lagerarm (13) eine Aufnahme (17) aufweist, in der die Elektronik (33) eingebracht ist, wobei insbesondere in der Aufnahme (17) Vergussmasse (18) eingebracht ist.

15. Handhabe nach einem der vorhergehenden Ansprüche,
**dadurch gekennzeichnet,**
**dass** die Achse (15) zwischen der Elektronik (33) und dem Griff (10) liegt.

16. Handhabe nach einem der vorhergehenden Ansprüche,
**dadurch gekennzeichnet,**
**dass** das Befestigungsmittel (16) als elektrischer Kontakt zwischen dem Sensorelement (31, 32) und der Elektronik (33) dient und/oder dass die Elektronik (33) innerhalb des Lagerarms (13) integriert ist.

## Claims

1. Operating handle for a moveable part (1) of a motor vehicle, particularly for a door (1) of a hatch flap or such like,
with a handle (10) attachable at the moveable part (1) accessible for a user from the outside and a bearing arm (13) which is connected to the handle (10),
wherein the handle (10) is suitable to be pivoted about an axis (15) at the inside of the moveable part (1) at which the bearing arm (13) engages,
an electronic assembly (30) which comprises at least a sensor element (31, 32) and an electronic (33) wherein the electronic assembly (30) is suitable to be activated from the user in the vicinity of the handle (10) and is connectable with a vehicle-related security system (2),
wherein the sensor element (31, 32) is arranged at the handle (10) and the electronic (33) is arranged at the bearing arm (13),
the handle (10) comprises a cavity (11) and a thin-walled enveloping body (12),
the enveloping body (12) comprises the cavity (11) and serves as a carrier for the sensor element (31, 32) wherein the cavity is free from components,
wherein the sensor element (31, 32) is integrated in the thin-walled enveloping body (12) and arranged in the handle (10) in the vicinity of the surface.

2. Operating handle according to claim 1
**characterized in that**
the electronic (33) is assembled in the vicinity of the axis (15) about which the bearing arm (13) is suitable to be pivoted.

3. Operating handle according to claim 1 or 2
**characterized in that**
the electronic (33) is assembled at the bearing arm (13) such that the electronic (33) acts as a mass balancing which at least contributes to or prevents that the handle (10) moves from the moveable part (1), following effective accelerations which may act on the motor vehicle during a crash

4. Operating handle according to one of the preceding claims
**characterized in that**
the handle (10) is configured without casting component and/or that a container (36) is intended in which the electronic (33) is assembled wherein particularly the electronic (33) is arranged sealed within the container (36).

5. Operating handle according to one of the preceding claims
**characterized in that**
the bearing arm (13) comprises a fixation means (16) at with the electronic (33) and/or the container (36) is assembled.

6. Operating handle according to one of the preceding claims
**characterized in that**
the sensor element (31, 32) is an electrode and/or the sensor element (31, 32) is configured as a capacitive sensor and/or is configured as a piezosensor.

7. Operating handle according to one of the preceding claims
**characterized in that**
the enveloping body (12) comprises an inner area (12.2) and an outer area (12.1) wherein the inner area (12.2) is facing the moveable part (1) and the outer area (12.1) is facing away from the moveable part (1) wherein at least in one of both areas (12.1, 12.2) the sensor element (31, 32) is arranged.

8. Operating handle according to claim 7
**characterized in that**
the electronic (33) comprises two sensor elements (31, 32), wherein the first sensor element (31) is intended in the outer area (12.1) and the second sensor element (32) is intended in the inner area (12.2), wherein particularly the first sensor element (31) is configured such that a conscious action of the user is detectable, wherein a vehicle-related locking process is releasable via the security system (2) and/or that the second sensor element (32) is configured such that a conscious action of the user is detectable, wherein a vehicle-related unlocking process is releasable via the security system (2).

9. Operating handle according to claim 8
**characterized in that**
the conscious action is an approaching of the user to the handle (10) particularly to the inner area (12.2) and/or to the outer area (12.1) and/or the conscious action is an touching of the handle (10) particularly of the inner area (12.2) and/or of the outer area (12.1).

10. Operating handle according to one of the preceding claims
**characterized in that**
the sensor element (31, 32) is metallic and acts as an electrode wherein particularly the sensor element (31, 32) is configured as a wire element, film or stamp part particularly stamp sheet.

11. Operating handle according to one of the preceding claims
**characterized in that**
the sensor element (31, 32) is embodied within the enveloping body (12) and/or that a wire (34) connects the sensor element (31, 32) with the electronic (33) wherein the wire (34) comprises a shielding (35) wherein a signal transfer is performable interference-free between the sensor element (31, 32) and the electronic (33).

12. Operating handle according to one of the preceding claims
**characterized in that**
the handle (10) comprises a material structure with microcells (20) wherein particularly the microcells (20) comprise a size with an average of less than 500 µm and/or that each microcell (20) is closed independently from the neighboring assembled cell and/or the handle (10) comprises a microcell volume of at least 5% preferably of more than 15% particularly preferred of more than 25% and most preferred of more than 45% and/or the handle (10) comprises a microcell density of more than 10⁵ cells per cm³ and/or the handle (10) comprises a cavity volume of at least 50% preferably of more than 60% particularly preferred of more than 80% and most preferred of more than 90%.

13. Operating handle according to one of the preceding claims
**characterized in that**
the electronic (33) and/or the container (36) is snapped at the bearing arm (13).

14. Operating handle according to of the preceding claims
**characterized in that**
the bearing arm (13) comprises an acceptance (17) in which the electronic (33) is introduced wherein particularly casting components (18) are introduced in the acceptance (17).

15. Operating handle according to one of the preceding claims
**characterized in that**
the axis (15) is between the electronic (33) and the handle (10).

16. Operating handle according to one of the preceding claims
**characterized in that**
the fixation means (16) serves as an electric contact between the sensor element (31, 32) and the electronic (33) and/or that the electronic (33) is integrated within the bearing arm (13).

## Revendications

1. Manette pour un élément mobile (1) d'un véhicule automobile, en particulier pour une porte (1), un hayon ou analogues,
avec une poignée (10) pouvant être fixée sur l'élément mobile (1) et accessible de l'extérieur pour un utilisateur, et avec un bras formant palier (13), qui est relié à la poignée (10), de sorte que la poignée (10) est capable de pivoter autour d'un axe (15) situé sur le côté intérieur de l'élément mobile (1) et sur lequel agit le bras formant palier (13),
avec un module électronique (30) qui présente au moins un élément détecteur (31, 32) et une unité électronique (33), sachant que le module électronique (30) est capable d'être activé par l'utilisateur à proximité de la poignée (10) et peut être relié à un système de sécurité (2) du véhicule automobile, sachant que l'élément détecteur (31, 32) est disposé sur la poignée (10) et que l'unité électronique (33) est disposée sur le bras formant palier (13),
que la poignée (10) présente une cavité (11) et un corps formant enveloppe (12) à paroi mince,
que le corps formant enveloppe (12) entoure la cavité (11) et sert de support pour l'élément détecteur (31, 32), sachant que la cavité (11) est dépourvue d'éléments constructifs,
sachant que l'élément détecteur (31, 32) est conjointement intégré dans le corps formant enveloppe (12) à paroi mince et se situe à proximité de la surface dans la poignée (10).

2. Manette selon la revendication 1, **caractérisée en ce que** l'unité électronique (33) est disposée à proximité de l'axe (15) autour duquel le bras formant palier (13) est capable de pivoter.

3. Manette selon la revendication 1 ou 2, **caractérisée en ce que** l'unité électronique (33) est disposée sur le bras formant palier (13) de telle sorte que l'unité électronique (33) joue le rôle d'équilibrage des masses, qui au moins contribue à ce que ou empêche que la poignée (10) se déplace hors de l'élément mobile (1) sous l'action d'accélération agissant éventuellement lors d'un accident sur le véhicule automobile.

4. Manette selon l'une des revendications précédentes, **caractérisée en ce que** la poignée (10) est réalisée sans masse de remplissage et/ou **en ce qu'**il est prévu un conteneur (36) dans lequel est disposée l'unité électronique (33), sachant notamment que l'unité électronique (33) se trouve en étanchéité à l'intérieur du conteneur (36).

5. Manette selon l'une des revendications précédentes, **caractérisée en ce que** le bras formant palier (13) présente un moyen de fixation (16) sur lequel sont disposés l'unité électronique (33) et/ou le conteneur (36).

6. Manette selon l'une des revendications précédentes, **caractérisée en ce que** l'élément détecteur (31, 32) est une électrode et/ou **en ce que** l'élément détecteur (31, 32) est réalisé sous forme de détecteur capacitif et/ou d'un détecteur piézoélectrique.

7. Manette selon l'une des revendications précédentes, **caractérisée en ce que** le corps formant enveloppe (12) présente une région intérieure (12.2) et une région extérieur (12.1), sachant que la région intérieure (12.2) est tournée vers l'élément mobile (1) et que la région extérieure (12.1) est opposée à l'élément mobile (1), sachant que l'élément détecteur (31, 32) est disposé au moins dans une des deux régions (12.1, 12.2).

8. Manette selon la revendication 7, **caractérisée en ce que** l'unité électronique (33) présente deux éléments détecteurs (31, 32), sachant que le premier élément détecteur (31) est prévu dans la région extérieure (12.1) et que le deuxième élément détecteur (32) est prévu dans la région intérieure (12.2), sachant notamment que le premier élément détecteur (31) est réalisé de telle sorte qu'une action intentionnelle de l'utilisateur peut être détectée, de sorte qu'un processus de verrouillage peut être déclenché au moyen du système de sécurité (2) sur le véhicule automobile, et/ou que le deuxième élément détecteur (32) est réalisé de telle sorte qu'une action intentionnelle de l'utilisateur peut être détectée, de sorte qu'un processus de déverrouillage peut être déclenché au moyen du système de sécurité (2) sur le véhicule automobile.

9. Manette selon la revendication 8, **caractérisée en ce que** l'action intentionnelle est une approche de l'utilisateur de la poignée (10), en particulier de la région intérieure (12.2) et/ou de la région extérieure (12.1), et/ou l'action intentionnelle est un contact avec la poignée (10), en particulier avec la région intérieure (12.2) et/ou avec la région extérieure (12.1).

10. Manette selon l'une des revendications précédentes, **caractérisée en ce que** l'élément détecteur (31, 32) est métallique et joue le rôle d'électrode, sachant notamment que l'élément détecteur (31, 32) est réalisé sous forme d'élément filaire, de film ou de pièce découpée, en particulier de tôle découpée.

11. Manette selon l'une des revendications précédentes, **caractérisée en ce que** l'élément détecteur (31, 32) est inséré à l'intérieur du corps formant enveloppe (12), et/ou **en ce qu'**une ligne (34) relie l'élément détecteur (31, 32) à l'unité électronique (33), sachant que la ligne (34) présente un blindage (35), de sorte qu'une transmission de signaux peut être effectuée sans parasites entre l'élément détecteur (31, 32) et l'unité électronique (33).

12. Manette selon l'une des revendications précédentes, **caractérisée en ce que** la poignée (10) présente une structure de matériau avec des microcellules (20), sachant notamment que les microcellules (20) présentent une taille de moins de 500 µm en moyenne, et/ou que chaque microcellule (20) est fermée indépendamment des cellules voisines, et/ou que la poignée (10) présente un volume de microcellules d'au moins 5%, de préférence de plus de 15%, d'une manière particulièrement préférée de plus de 25% et d'une manière tout particulièrement préférée de plus de 45%, et/ou que la poignée (10) présente une densité de microcellules de plus de 10⁵ cellules/cm³, et/ou que la poignée (10) présente un volume de cavité d'au moins 50%, de préférence de plus de 60%, d'une manière particulièrement préférée de plus de 80% et d'une manière tout particulièrement préférée de plus de 90%.

13. Manette selon l'une des revendications précédentes, **caractérisée en ce que** l'unité électronique (33) et/ou le conteneur (36) sont encliquetés sur le bras formant palier (13).

14. Manette selon l'une des revendications précédentes, **caractérisée en ce que** le bras formant palier (13) présente une partie réceptrice (17) dans laquelle est mise en place l'unité électronique (33), sachant notamment que de la masse de remplissage (18) est mise en place dans la partie réceptrice (17).

15. Manette selon l'une des revendications précédentes, **caractérisée en ce que** l'axe (15) se situe entre l'unité électronique (33) et la poignée (10).

16. Manette selon l'une des revendications précédentes, **caractérisée en ce que** le moyen de fixation (16) sert de contact électrique entre l'élément détecteur (31, 32) et l'unité électronique (33), et/ou **en ce que** l'unité électronique (33) est intégrée à l'intérieur du bras formant palier (13).
